# EUROPÄISCHE PATENTSCHRIFT

(11) **EP 0 767 942 B1**
(45) Veröffentlichungstag und Bekanntmachung des Hinweises auf die Patenterteilung: **15.07.1998**
(21) Anmeldenummer: 95920781.2
(22) Anmeldetag: 06.06.1995
(51) Int. Cl.: G07F 17/32, G07F 7/02

(54) **SYSTEM ZUM BARGELDLOSEN SPIELEN AN GELDBETÄTIGTEN UNTERHALTUNGSAUTOMATEN**
SYSTEM PERMITTING COIN-OPERATED ENTERTAINEMENT MACHINES TO BE PLAYED WITHOUT USING COINS
SYSTEME DE JEU, SANS PAIEMENT EN ESPECES, UTILISANT DES APPAREILS AUTOMATIQUES DE DIVERTISSEMENT DECLENCHES PAR DES PIECES DE MONNAIE

(30) Priorität: 27.06.1994 DE 4422370
(43) Veröffentlichungstag der Anmeldung: 16.04.1997
(73) Patentinhaber: NSM AKTIENGESELLSCHAFT, 55411 Bingen (DE)
(72) Erfinder: MULDER, Arjen, D-55413 Manubach (DE)
(74) Vertreter: Becker, Bernd, Dipl.-Ing.
(86) Internationale Anmeldenummer: DE9500762
(87) Internationale Veröffentlichungsnummer: WO9600427

(56) Entgegenhaltungen:
- EP-A- 0 360 613
- WO-A-91/09369
- DE-A- 4 222 202
- DE-U- 9 201 899
- US-A- 5 265 874

## Beschreibung

Die Erfindung betrifft ein System zum bargeldlosen Spielen an geldbetätigten Unterhaltungsgeräten mit Benutzerkarten, mit
- einer Anzahl von Unterhaltungsgeräten, wobei die Unterhaltungsgeräte jeweils einen Speicher mit einem Guthabenspeicher für den jeweiligen Spieler während der Nutzungsdauer des Unterhaltungsgerätes durch diesen und eine Bedieneinheit für die Übertragung des Inhalts des Guthabenspeichers zu einem zentralen Speicher aufweisen,
- einem mit den Unterhaltungsgeräten verbundenen Zentralrechner, wobei der Zentralrechner eine Benutzerkarten-Lese/Schreibeinrichtung, eine Einreichung zum Prüfen eingelesener Benutzerkarten, einen zentralen Speicher, eine Einrichtung zur Freigabe von Benutzerkarten für die Benutzung der Unterhaltungsgeräte des Systems und eine Einrichtung zur Verarbeitung von Spielerdaten aufweist,
- wobei als Benutzerkarten handelsübliche Kreditkarten vorgesehen sind, und
- wobei der Zentralrechner über eine Kartenfernübertragungsleitung mit einem Kreditkaten-Bankterminal verbunden ist und die Auf/Abbuchung des Kartenkontos durchführt.

Bei einem aus der DE-C-34 41 518 bekannten System zum Spielen an geldbetätigten Unterhaltungsgeräten sind die verwendeten Benutzerkarten spezielle Karten. Eine Übertragung des Kartenguthabens auf den Speicher eines Zentralrechners ist nur bei korrekt eingegebenem Benutzercode, richtigem Tagesdatum und Standortdaten möglich. Nach positiver Prüfung wird die Benutzerkarte freigegeben und kann an einem oder auch verschiedenen Unterhaltungsgeräten benutzt werden. Die Guthabenführung erfolgt im Speicher des Zentralrechners, während in den Unterhaltungsgeräten lediglich die Kontonummer des im zentralrechner geführten Guthabenspeichers gespeichert ist. Für die Auszahlung von Benutzerguthaben ist eine Auszahleinrichtung vorgesehen. Jeweils zu Betriebsschluß am Tagesende werden etwa aufgrund von Unregelmäßigkeiten noch bestehende Konten bzw. Guthabenspeicher im Zentralrechner gelöscht. Des weiteren ist eine Auswerteeinrichtung vorgesehen, die auch Belege an die Benutzer ausgibt.

Mit den zunehmenden Möglichkeiten der Datenkommunikation und immer größerer Akzeptanz des bargeldlosen Zahlungsverkehrs verliert der Bargeldumsatz in Banken, Geschäften, Tankstellen, etc. immer mehr an Bedeutung. Die Verbraucher können ungeachtet des jeweiligen Standorts und auch vorhandenen Bargeldbestands Geldtransaktionen durchführen, vorausgesetzt, sie führen ihre Scheck- und/oder Kreditkarte mit sich und befinden sich an einem entsprechend ausgestatteten Ort.

Des weiteren gibt es inzwischen immer mehr und unterschiedliche Kreditkarten für die verschiedenen Institutionen und Organisationen. Zum Teil handelt es sich um vielseitig einsetzbare Karten, zum Teil sind diese aber nur an speziellen Orten verwendbar. Auf diese Weise häufen die Verbraucher eine immer größere Anzahl von Karten an. Dies wird inzwischen zunehmend als lästig empfunden.

In der DE-A- 42 22 202 ist eine Einrichtung zur Kredit- und Wertkarteneingabe bei Spielautomaten beschrieben, die ein zentral angeordnetes Lese- und Bediengerät umfaßt. Dort wird die Karte eingelesen und geprüft. Der Spieler gibt die Nummer des Spielgeräts, mit dem er spielen möchte, ferner den Betrag an, den er für den Spielbetrieb bereitstellen möchte. Entsprechend wird dieser Betrag dem genannten Spielgerät gutgeschrieben und mittels einer dort vorgesehenen Einheit während des Spielbetriebes aktualisiert. Umgekehrt kann der in der Einheit des Spielgeräts vorhandene Geldbetrag zurück zum zentral angeordneten Lese- und Bediengerät übertragen werden. Eine Zifferntastatur am Spielgerät ist vorgesehen, um bei entsprechender Eingabe den Gutschriftbetrag des Spielers für eine gewisse Zeit zu blockieren, so daß der Spieler vorübergehend das Spielgerät verlassen kann, ohne befürchten zu müssen, sein Guthaben durch Manipulationen oder Versehen Dritter zu verlieren.

Aus der WO-A- 91/09369 sind ein Verfahren und eine Vorrichtung zur Kreditvergabe bei Unterhaltungsgeräten bekannt, die mit Kreditkartennutzung arbeiten. Münzeingabe und Bargeldauszahlung sind ebenfalls vorgesehen.

In der EP-A-0 360 613 ist die Verwendung von Karten zur Gewinnauszahlung bei einem Unterhaltungsgerätesystem beschreiben.

Der Erfindung liegt die Aufgabe zugrunde, ein System zum Spielen an geldbetätigten Unterhaltungsgeräten zu schaffen, bei dem bargeldlos gespielt werden kann und zugleich keine zusätzliche Benutzerkarte erforderlich ist.

Diese Aufgabe wird bei einem System nach dem Oberbegriff des Anspruches 1 erfindungsgemäß dadurch gelöst, daß
- die Unterhaltungsgeräte mit einer Benutzerkarten-Lese/Schreibeinrichtung versehen sind und eine Prüfeinrichtung für die Benutzerkarten aufweisen, und
- für die Übertragung des Guthabenspeicherstandes der Unterhaltungsgeräte zum Speicher des Zentralrechners jeweils eine Transaktionstaste an den Unterhaltungsgeräten vorgesehen ist, die die Übertragung des Speicherinhalts des Guthabenspeichers zum Speicher des Zentralrechners und das Laden des Guthabenspeichers nach der Datenübertragung auslöst und das Unterhaltungsgerät für den nächsten Benutzer freigibt.
Das erfindungsgemäße System ermöglicht es somit, mit marktüblichen Kreditkarten wie Eurocard, Visacard, Smartcard, etc. Zu spielen, die an Tankstellen, in bestimmten Geschäften etc. zum Kaufen und Bezahlten verwendet werden.

Für die Prüfung der Kreditkarte braucht z.B. in üblicher Weise lediglich der PIN-Code eingegeben zu werden. Dies geschieht zweckmäßig zentral, so daß in der Regel auf eine entsprechende Prüfeinrichtung an den einzelnen Unterhaltungsgeräten verzichtet werden kann. Wird die betreffende Kreditkarte nach Codeeingabe als korrekt angesehen, wird sie für die Benutzung in dem Unterhaltungsgerätesystem freigegeben und es kann an beliebigen Unterhaltungsgeräten gespielt werden.

Mit Lesen der Karte an einem Unterhaltungsgerät erfaßt dieses das Benutzerkonto. Bei Gewinn wird der Benutzerkredit erhöht und bei Verlust reduziert. Diese Aktualisierung geschieht zweckmäßig off-line.

Vorteilhaft weisen die Unterhaltungsgeräte einen Geräte-Guthabenspeicher, ein sogenanntes Füllkonto, auf, das etwa mit der Geldfüllung in den Unterhaltungsgeräten vergleichbar ist. Macht ein Spieler einen Gewinn, so wird von diesem Füllkonto ein entsprechender Betrag auf das Spielerkonto übertragen.

Der Speicher der Unterhaltungsgeräte enthält somit zum einen Benutzerdaten und zum anderen Kreditdaten betreffend den jeweiligen Benutzer bzw. dessen Kreditkarte. In diesem Speicher werden die Gewinne und Verluste erfaßt, bis der Benutzerkredit verbraucht ist oder der Benutzer das betreffende Unterhaltungsgerät verlassen möchte.

Um eine Umspeicherung zu erzielen, beispielsweise zwecks Gutschrift auf das Kreditkartenkonto, ist eine Übertragung des Guthabenspeicherstandes der Unterhaltungsgeräte zum Speicher des Zentralrechners jeweils mittels einer Transaktionstaste vorgesehen. Eine Betätigung der Transaktionstaste löst die Übertragung des Speicherinhalts des Guthabenspeichers zum Speicher des Zentralrechners aus. Dies beinhaltet die Übertragung der Kreditdaten und auch der Benutzer- und Unterhaltungsgerätedaten. Im Fall einer Überprüfung der Transaktion ist so eine ausreichende Dokumentation gewährleistet.

Bei der Transaktionstaste muß es sich nicht unbedingt um eine Taste handeln. Dieser Begriff soll vorliegend auch ggf. eine andere Eingabeeinrichtung wie eine Tastatur, Schalter, etc. mit umfassen, soweit diese nur die Eingabe eines entsprechenden benötigten Befehls ermöglichen.

Vorteilhaft ist bei der Transaktionsauslösung vorgesehen, daß eine Betätigung der Transaktionstaste das Löschen des Guthabenspeichers nach der Datenübertragung auslöst und das Unterhaltungsgerät für den nächsten Benutzer freigibt.

Bei einer Variante des erfindungsgemäßen Systems ist eine Belegausgabeeinrichtung vorgesehen, die die Karten-Auf/Abbuchungen und/oder Spieldaten ausgibt. Dies kommt den Verbraucherwünschen nach Überprüfbarkeit der Transaktionen entgegen. Der Beleg kann eine ganze Liste von Transaktionen, Gerätebedienungs/Spielangaben, etc. enthalten.

Die Auf/Abbuchung des Kartenkontos eines Benutzers durch den Zentralrechner geschieht vorteilhaft im On-line-Betrieb. Auf diese Weise werden Gutschriften sofort durchgeführt und Nachteile durch einen eventuell später stattfindendem Datenverlust sind von vornherein ausgeschaltet. Für die Auf/Abbuchungen ist zweckmäßig eine Ein/Ausgabeeinrichtung vorgesehen.

Es kann erfindungsgemäß eine Kontrolleinrichtung vorgesehen sein, die vorbestimmte Benutzerkarten von der Benutzung des Systems ausschließt. Dies ermöglicht es, Spielsüchtige vom Spielbetrieb fernzuhalten.

Als Service kann eine Aufladeeinrichtung für das Aufladen eines speziellen Speichers der Benutzerkarten im On-line-Betrieb vorgesehen sein. Dies ist eine Dienstleistung des Kreditinstituts, die dem Benutzer der Unterhaltungsgeräte zugute kommt, da diese nicht zur Bank oder dergleichen gehen müssen, sondern vor Ort die Karte aufladen können.

Die Erfindung wird im folgenden weiter anhand eines bevorzugten Ausführungsbeispiels und der Zeichnung beschrieben. In der Zeichnung zeigen:
- Fig. 1: eine schematische Darstellung des Aufbaus des Systems,
- Fig. 2: eine schematische Darstellung der Funktion des Systems und
- Fig. 3: eine schematische Ansicht eines Unterhaltungsgeräts zur Verwendung bei dem System.

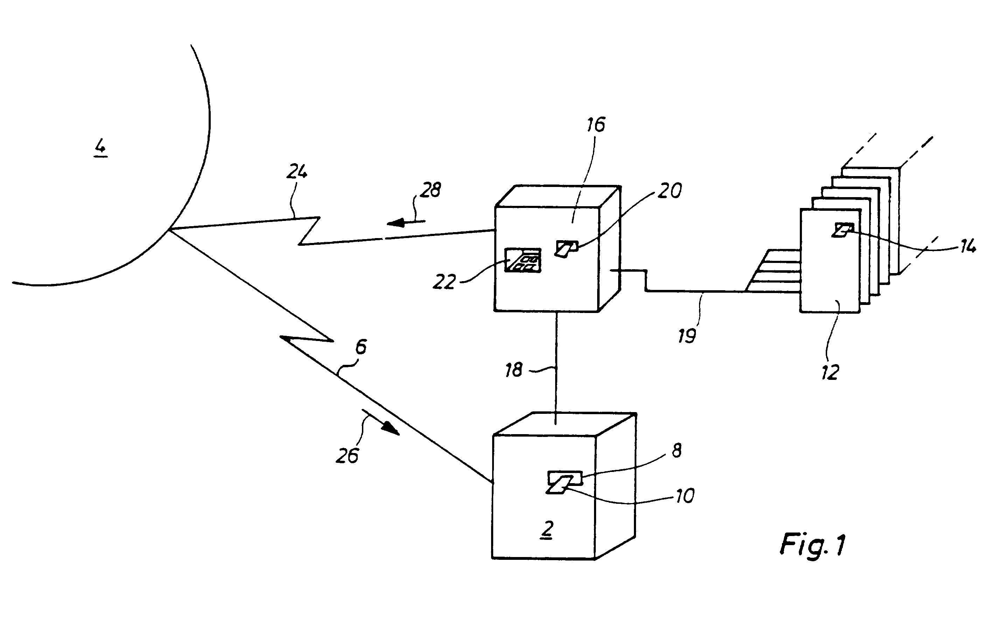

Es wird im folgenden zunächst auf Fig. 1 Bezug genommen, in der der Aufbau des erfindungsgemäßen Systems dargestellt ist. Eine Benutzerkarten-Lese/Schreibeinrichtung 2 eines Zentralrechners ist mit einer Bank bzw. einem Geldinstitut 4 oder dergleichen, d.h. einem entsprechenden Terminal, über eine Datenfernübertragungsleitung 6 verbunden. Die Lese/ Schreibeinrichtung 2 weist einen Einführschlitz 8 für zu lesende oder zu beschreibende Kreditkarten 10 auf.

Das System umfaßt eine Anzahl von Unterhaltungsgeräten 12 beliebiger Art, die ebenfalls mit Lese/Schreibeinrichtungen 14 für die Benutzerkarten versehen sind.

Ferner umfaßt das veranschaulichte Ausführungsbeispiel des erfindungsgemäßen Systems eine Ein/Ausgabeeinrichtung 16 für Karten-Auf/Abbuchungen. Diese Einrichtung ist über eine Leitung 18 mit dem Zentralrechner bzw. den Unterhaltungsgeräten 14 verbunden. Sie weist ebenfalls eine Benutzerkarten-Lese/Schreibeinrichtung 20 und ferner eine Belegausgabeeinrichtung 22 auf. Über eine Datenfernübertragungsleitung 24 ist die Ein/Ausgabeeinrichtung 16 mit dem Bankterminal 4 verbunden. Die Geldflüsse vom und zum Bankterminal 4 bzw. Kreditinstitut sind durch Pfeile 26, 28 angedeutet.

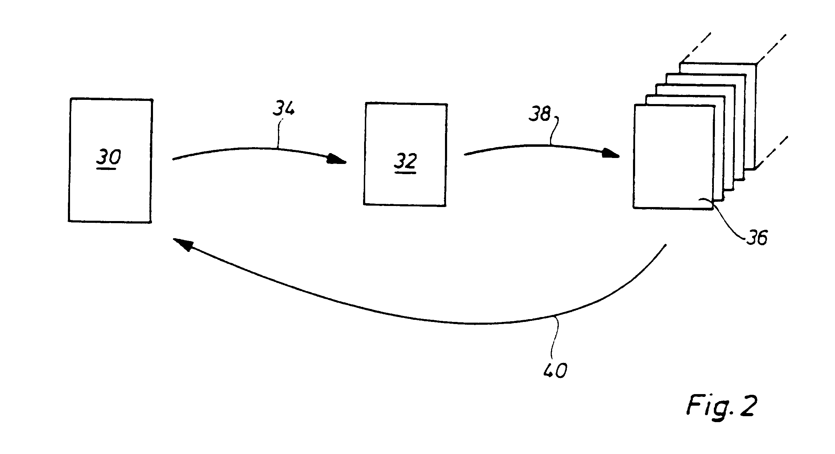

Mehr im einzelnen erfolgt der Geldtransfer, wie in Fig. 2 veranschaulicht. Mit 30 ist ein Guthabenkonto eines Benutzers (Guthabenspeicher) eines Unterhaltungsgeräts bezeichnet. Bei Verlust wird von diesem Guthabenkonto ein entsprechender Betrag einem Geräte-Guthabenspeicher (Füllkonto) 32 gutgeschrieben. Dieser Transfer ist durch das Bezugszeichen 34 verdeutlicht. Im Fall eines Gewinns wird wiederum vom Füllkonto ein entsprechender Betrag dem Guthahbenkonto 30 gutgeschrieben. Will der Benutzer bzw. Spieler das Unterhaltungsgerät wechseln, erfolgt eine Gutschrift vom Füllkonto 32 auf den Guthabenspeicher 36 im Zentralrechner (Pfeil 38). Von diesem wiederum erfolgt eine Aufbuchung eines Guthabenkontos eines Unterhaltungsgeräts, das der Benutzer als nächstes bedienen möchte (Pfeil 40).

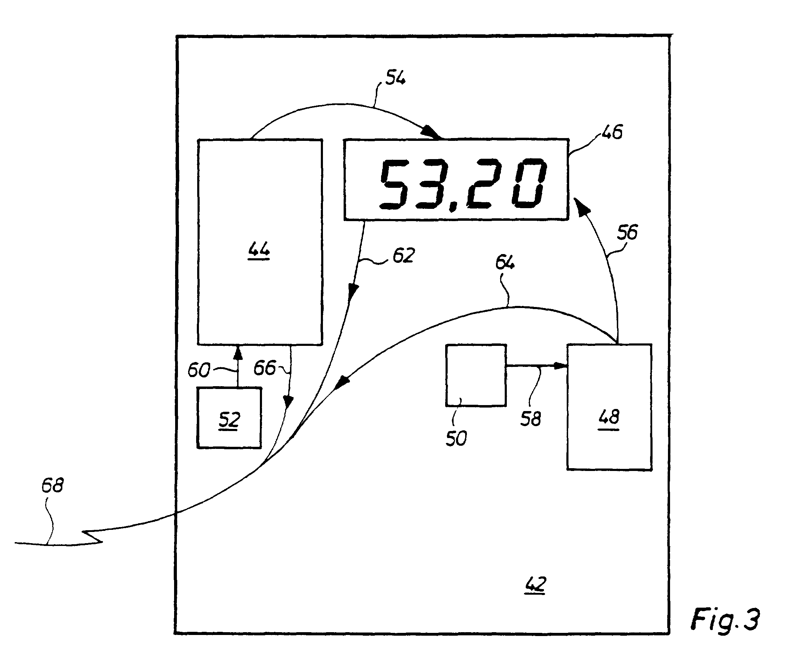

Ein bei dem erfindungsgemäßen System verwendbares Unterhaltungsgerät 42 ist in Fig. 3 veranschaulicht. Dieses umfaßt eine Steuereinheit 44 und eine Anzeige 46, die z.B. den jeweiligen Gewinn- oder Verlustbetrag anzeigt. Bei 48 ist eine Benutzerkarten-Ein/Ausleseeinrichtung angedeutet. Eine Abbuchungstaste 50 bucht zum einen den für ein Spiel vorgesehenen Betrag von der Karte bzw. einem im Unterhaltungsgerät vorgesehenen Guthabenkonto 30 ab. Eventuell kann auch eine Abbuchung direkt im Kartenspeicher erfolgen. Eine Rückgabetaste 52 bewirkt eine Rückbuchung des Guthabenkontobetrags auf einen entsprechenden Speicher im Zentralrechner oder der Kreditkarte. Pfeile 54, 56 veranschaulichen die Darstellung auf der Anzeige. Die Pfeile 58, 60 dienen zur Verdeutlichung der Tastenbetätigungen. Die Pfeile 62, 64, 66 und 68 stellen die Übertragung von Informationen der Rückbuchung, Benutzerkarteninformation, Geräteinformation und Datenübertragung vom Unterhaltungsgerät zum Zentralrechner dar.

Selbstverständlich sind diverse Modifikationen des erfindungsgemäßen Systems über die obenstehend beschriebenen Systemvariante hinaus möglich. Diese sollen daher als nicht den Umfang der Erfindung einschränkend angesehen werden, der lediglich durch die Ansprüche bestimmt ist.

## Patentansprüche

1. System zum bargeldlosen Spielen an geldbetätigten Unterhaltungsgeräten (12) mit Benutzerkarten (10), mit
- einer Anzahl von Unterhaltungsgeräten (12), wobei die Unterhaltungsgeräte jeweils einen Speicher mit einem Guthabenspeicher (30) für den jeweiligen Spieler während der Nutzungsdauer des Unterhaltungsgeräts (12) durch diesen und eine Bedieneinheit (52) für die Übertragung des Inhalts des Guthabenspeichers zu einem zentralen Speicher aufweisen,
- einem mit den Unterhaltungsgeräten verbundenen Zentralrechner, wobei der Zentralrechner eine Benutzerkarte-Lese/Schreibeinrichtung (8), eine Einrichtung zum Prüfen eingelesener Benutzerkarten (10), einen zentralen Speicher, eine Einrichtung zur Freigabe von Benutzerkarten für die Benutzung der Unterhaltungsgeräte des Systems und eine Einrichtung zur Verarbeitung von Spielerdaten aufweist,
- wobei als Benutzerkarten handelsübliche Kreditkarten vorgesehen sind, und
- wobei der Zentralrechner über eine Datenfernübertragungsleitung (6, 24) mit einem Kreditkarten-Bankterminal (4) verbunden ist und die Auf/Abbuchung des Kartenkontos durchführt,
dadurch gekennzeichnet, daß
- die Unterhaltungsgeräte (12) mit einer Benutzerkarten-Lese-Schreibeinrichtung (14) versehen sind und eine Prüfeinrichtung für die Benutzerkarten (10) aufweisen, und
- für die Übertragung des Guthabenspeicherstandes der Unterhaltungsgeräte (12) zum Speichern des Zentralrechners jeweils eine Transaktionstaste (52) an den Unterhaltungsgeräten vorgesehen ist, die die Übertragung des Speicherinhalts des Guthabenspeichers zum Speicher des Zentralrechners und das Laden des Guthabenspeichers nach der Datenübertragung auslöst und das Unterhaltungsgerät für den nächsten Benutzer freigibt.

2. System nach Anspruch 1, dadurch **gekennzeichnet**, daß die Auf/Abbuchung des Kartenkontos im On-line-Betrieb vorgesehen ist.

3. System nach Anspruch 1 oder 2, dadurch **gekennzeichnet**, daß der Stand des Guthabenspeichers der Unterhaltungsgeräte jeweils im Off-line-Betrieb aktualisiert wird.

4. System nach einem der Ansprüche 1 bis 3, dadurch **gekennzeichnet**, daß eine Ein/Ausgabeeinrichtung (16) für Karten-Auf/Abbuchungen vorgesehen ist.

5. System nach einem der Ansprüche 1 bis 4, dadurch **gekennzeichnet,** daß eine Belegausgabeeinrichtung (22) vorgesehen ist, die die Karten-Auf/Abbuchungen und/oder Spieldaten ausgibt.

6. System nach einem der Ansprüche 1 bis 5, dadurch **gekennzeichnet**, daß die Unterhaltungsgeräte (12) jeweils einen Geräte-Guthabenspeicher (32) aufweisen, von dem der Betrag eines Benutzergewinns auf den Guthabenspeicher (36) des Benutzers übertragen wird.

7. System nach einem der Ansprüche 1 bis 6, dadurch **gekennzeichnet,** daß die Unterhaltungsgeräte vernetzt sind.

8. System nach einem der Ansprüche 1 bis 7, dadurch **gekennzeichnet,** daß eine Kotrolleinrichtung vorgesehen ist, die vorbestimmte Benutzerkarten von der Benutzung des Systems ausschließt.

9. System nach einem der Ansprüche 1 bis 8, dadurch **gekennzeichnet**, daß eine Aufladeeinrichtung für das Aufladen eines speziellen Speichers der Benutzerkarten im On-line-Betrieb vorgesehen ist.

10. System nach einem der Ansprüche 1 bis 9, dadurch **gekennzeichnet**, daß eine Bargeldauszahlung vorgesehen ist.

## Claims

1. System for the cashless playing of money-operated entertainment machines (12) with player cards (10), having
- a number of entertainment machines (12), the entertainment machines each comprising a memory, which is provided with a credit memory (30) for each particular player whilst the latter is using the entertainment machine (12), and a control unit (52) for transmitting the contents of the credit memory to a central memory,
- a central computer which is connected to the entertainment machines, the central computer comprising a device (8) for reading/recording player cards, a device for testing read-in player cards (10), a central memory, a device for releasing player cards for using the entertainment machines of the system and a device for processing player data, commercially available credit cards being envisaged as the player cards,
- the central memory being connected to a credit card bank terminal (4) via a remote data transmission line (6, 24) and effecting the crediting/debiting of the card account,
characterised in that
- the entertainment machines (12) are provided with a player card reading/recording device (14) and comprise a device for testing the player cards (10), and
- a transaction key (52) is provided on each of the entertainment machines (12) for transmitting the credit memory status of the entertainment machines to the memory of the central computer, said key actuating the transmission of the memory contents of the credit memory to the memory of the central computer and the loading of the credit memory after the data transmission and releases the entertainment machine for the next player.

2. System according to claim 1, characterised in that the crediting/debiting of the card account is provided in the on-line operation.

3. System according to claim 1 or 2, characterised in that the status of the credit memory of each of the entertainment machines is updated in the off-line operation.

4. System according to one of claims 1 to 3, characterised in that an input/output device (16) is provided for card credits/debits.

5. System according to one of claims 1 to 4, characterised in that a receipt dispensing device (22) is provided, which dispenses the card credits/debits and/or playing data.

6. System according to one of claims 1 to 5, characterised in that the entertainment machines (12) each have a machine credit memory (32), from which the amount of a player win is tranmitted to the credit memory (36) of the player.

7. System according to one of claims 1 to 6, characterised in that the entertainment machines are interconnected.

8. System according to one of claims 1 to 7, characterised in that a checking device is provided, which excludes predetermined player cards from using the system.

9. System according to one of claims 1 to 8, characterised in that a loading device is provided for the loading of a special memory for the player cards in the on-line operation.

10. System according to one of claims 1 to 9, characterised in that a cash pay-out is provided.

## Revendications

1. Système permettant de jouer sans argent comptant sur des machines de jeu (12) actionnées par des pièces de monnaie, au moyen de cartes d'utilisateur (10), comportant
- un nombre de machines de jeu (12), les machines de jeu comportant chacune une mémoire avec une mémoire de crédit (30) pour le joueur respectif pendant la durée d'utilisation de la machine de jeu (12) par celui-ci et une unité de commande (52) pour le transfert du contenu de la mémoire de crédit à une mémoire centrale,
- un ordinateur central relié aux machines de jeu, l'ordinateur central comportant un dispositif de lecture de cartes d'utilisateur/d'enregistrement (8), un dispositif de vérification des cartes d'utilisateur (10) mémorisées, une mémoire centrale, un dispositif d'autorisation des cartes d'utilisateur pour l'utilisation des machines de jeu du système et un dispositif de traitement des données des joueurs, des cartes de crédit du commerce étant prévues comme cartes d'utilisateur et
- l'ordinateur central étant relié, par une ligne de télétransmission de données (6, 24), à un terminal bancaire de cartes de crédit (4) et exécutant les opérations de crédit/débit du compte de la carte,
caractérisé en ce que
- les machines de jeu (12) sont pourvues d'un dispositif de lecture et d'enregistrement de cartes d'utilisateur (14) qui comporte un dispositif de vérification des cartes de lecture (10) et
- pour le transfert de l'état de la mémoire de crédit des machines de jeu (12) à la mémoire de l'ordinateur central il est prévu une touche de transaction (52) sur chacune des machines de jeu, qui déclenche le transfert du contenu de la mémoire de crédit à la mémoire de l'ordinateur central et le chargement de la mémoire de crédit, après la transmission des données, et qui libère la machine de jeu pour l'utilisateur suivant.

2. Système selon la revendication 1, caractérisé en ce que l'opération de crédit/débit du compte de la carte est prévue en ligne.

3. Système selon la revendication 1 ou 2, caractérisé en ce que l'état de la mémoire de crédit de la machine de jeu est actualisé chaque fois en ligne.

4. Système selon l'une des revendications 1 à 3, caractérisé en ce qu'il est prévu un dispositif d'entrée/sortie (16) pour des opérations de crédit/débit de cartes.

5. Système selon l'une des revendications 1 à 4, caractérisé en ce qu'il est prévu un dispositif d'édition de justificatifs (22), qui délivre les opérations de crédit/débit de cartes et/ou des données de jeu.

6. Système selon l'une des revendications 1 à 5, caractérisé en ce que les machines de jeu (12) comportent chacune une mémoire de crédit de machine (32), à partir de laquelle le montant d'un gain d'utilisateur est transmis à la mémoire de crédit (36) de l'utilisateur.

7. Système selon l'une des revendications 1 à 6, caractérisé en ce que les machines de jeu sont reliées en réseau.

8. Système selon l'une des revendications 1 à 7, caractérisé en ce qu'il est prévu un dispositif de contrôle, qui exclut des cartes d'utilisateur prédéterminées de l'utilisation du système.

9. Système selon l'une des revendications 1 à 8, caractérisé en ce qu'il est prévu un dispositif de chargement pour le chargement d'une mémoire spéciale des cartes d'utilisateur en fonctionnement en ligne.

10. Système selon l'une des revendications 1 à 9, caractérisé en ce qu'il est prévu un paiement en espèces.
